# FASCICULE DE BREVET EUROPEEN

(11) **EP 2 909 509 B1**
(45) Date de publication et mention de la délivrance du brevet: **21.09.2016**
(21) Numéro de dépôt: 13779291.7
(22) Date de dépôt: 23.09.2013
(51) Int. Cl.: F16H 48/14

(54) **DISPOSITIF DIFFÉRENTIEL POUR ENGIN ROULANT MOTORISÉ**
DIFFERENTIALVORRICHTUNG FÜR EIN MOTORISIERTES RADFAHRZEUG
DIFFERENTIAL DEVICE FOR A MOTORISED WHEELED VEHICLE

(30) Priorité: 18.10.2012 FR 1259929
(43) Date de publication de la demande: 26.08.2015
(73) Titulaire: France Reducteurs, 85500 Les Herbiers (FR)
(72) Inventeur: RAMBAUD, Jacques, F-85700 les Epesses (FR)
(74) Mandataire: Godineau, Valérie
(86) Numéro de dépôt international: PCT/FR2013/052212
(87) Numéro de publication internationale: WO 2014/060667

(56) Documents cités:
- US-A- 2 315 299
- US-A- 2 329 075
- US-A- 6 062 105

## Description

La présente invention concerne de manière générale les dispositifs différentiels.

L'invention concerne plus particulièrement un dispositif différentiel pour engin roulant automoteur. Ledit dispositif comprend une couronne d'entrée apte à être entrainée en rotation par le moteur dudit engin, deux arbres de roue distincts l'un de l'autre et répartis de part et d'autre de la couronne coaxialement à ladite couronne. Ledit dispositif comprend aussi deux mécanismes d'embrayage comprenant chacun un premier élément d'embrayage monté solidaire en rotation de l'un desdits arbres de roue, et un deuxième élément d'embrayage monté libre à rotation par rapport audit arbre et entrainable en rotation par la couronne. Lesdits deuxièmes éléments d'embrayage sont positionnés entre lesdits premiers éléments d'embrayage. Pour chaque mécanisme d'embrayage, ledit deuxième élément d'embrayage est apte à être déplacé axialement entre une position rapprochée dudit premier élément d'embrayage dans laquelle il est embrayé avec le premier élément d'embrayage, et une position écartée dudit premier élément d'embrayage dans laquelle il est débrayé du premier élément d'embrayage. Ladite couronne et les deuxièmes éléments d'embrayage sont munis de moyens de couplage entre eux en rotation.

L'invention concerne également un engin roulant automoteur, tel qu'un chasse-neige, équipé d'un tel dispositif différentiel.

On connaît de l'état de la technique et notamment du document GB2130315 un dispositif différentiel tel que décrit ci-dessus interposé entre les arbres de roue et le moteur d'un engin roulant automoteur. Un tel dispositif différentiel connu de l'état de la technique permet, au cours d'un virage, de libérer la roue extérieure de l'engin pour qu'elle puisse tourner plus vite que la roue intérieure et ainsi éviter le glissement de l'engin.

Le Document US 2329075 montre la préambule de la revendication 1.

Cependant, avec de tels dispositifs différentiels connus de l'état de la technique, la roue interne reste en prise avec le moteur de l'engin de sorte que le rayon de braquage de l'engin reste important, ce qui empêche de prendre des virages serrés et en particulier empêche de faire pivoter l'engin sur lui-même.

En particulier, dans le cas où l'engin est un chasse-neige, il est souhaitable de pouvoir déplacer le chasse-neige suivant une trajectoire en serpentin la plus resserrée possible pour éviter que des bandes de neige échappent au déblayage. Une telle trajectoire resserrée en serpentin nécessite que lorsque l'engin arrive en bout d'un segment droit du serpentin, ledit engin puisse être pivoté sur lui-même par le conducteur à l'aide du guidon de l'engin afin de déblayer la neige du segment suivant de la trajectoire en serpentin.

La présente invention a pour but de proposer un dispositif différentiel et un engin roulant automoteur correspondant permettant de réduire de manière simple et automatique le rayon de braquage de l'engin roulant automoteur équipé d'un tel dispositif afin de pouvoir prendre un virage très serré.

A cet effet, l'invention a pour objet un dispositif différentiel pour engin roulant automoteur, ledit dispositif comprenant :
- une couronne d'entrée apte à être entrainée en rotation par le moteur dudit engin,
- deux arbres de roue distincts l'un de l'autre et répartis de part et d'autre de la couronne coaxialement à ladite couronne,
- deux mécanismes d'embrayage comprenant chacun un premier élément d'embrayage monté solidaire en rotation de l'un desdits arbres de roue, et un deuxième élément d'embrayage monté libre à rotation par rapport audit arbre et entrainable en rotation par la couronne, lesdits deuxièmes éléments d'embrayage étant positionnés entre lesdits premiers éléments d'embrayage,

- pour chaque mécanisme d'embrayage, ledit deuxième élément d'embrayage étant apte à être déplacé axialement entre une position rapprochée dudit premier élément d'embrayage dans laquelle il est embrayé avec le premier élément d'embrayage, et une position écartée dudit premier élément d'embrayage dans laquelle il est débrayé du premier élément d'embrayage,
- ladite couronne et les deuxièmes éléments d'embrayage étant munis de moyens de couplage entre eux en rotation,
caractérisé en ce que chaque deuxième élément d'embrayage est aussi muni de moyens de contact d'appui avec l'autre deuxième élément d'embrayage, lesdits moyens de contact d'appui étant aptes, pour une première configuration angulaire donnée des deuxièmes éléments d'embrayage l'un par rapport à l'autre, à maintenir les deuxièmes éléments d'embrayage en position embrayée avec les premiers éléments d'embrayage correspondants,
et lesdits moyens de contact d'appui étant aussi aptes, pour une deuxième configuration angulaire donnée des deuxièmes éléments d'embrayage l'un par rapport à l'autre, différente de la première configuration, à autoriser le passage des deuxièmes éléments d'embrayage en position débrayée par rapport aux premiers éléments d'embrayage.

Ainsi, lorsque du fait d'une différence de vitesse entre les roues de l'engin au cours de la prise d'un virage, les deuxièmes éléments d'embrayage sont décalés angulairement l'un par rapport à l'autre, lesdits deuxièmes éléments d'embrayage ont la possibilité de se déplacer l'un par rapport à l'autre axialement dans le sens d'un rapprochement. Le rapprochement desdits deuxièmes éléments d'embrayage l'un par rapport à l'autre entraine alors le débrayage des roues correspondantes de l'engin.

Ainsi, lors d'un virage très serré où la roue extérieure a tendance à tourner plus vite que la couronne d'entrée et où la roue intérieure tourne en sens opposé à la couronne d'entrée, les deuxièmes éléments d'embrayage sont décalés angulairement l'un par rapport à l'autre, jusqu'à ce qu'ils arrivent chacun en butée contre des butées opposées formées par les moyens de couplage de la couronne d'entrée avec les deuxièmes éléments d'embrayage. Les premier et deuxième éléments d'embrayage de chaque mécanisme sont contraints à des vitesses de rotation différentes et ont alors tendance à s'écarter, ce que permet le décalage angulaire des deuxièmes éléments d'embrayage qui libère la mobilité axiale de rapprochement desdits deuxièmes éléments d'embrayage des deux mécanismes l'un par rapport à l'autre.

A l'inverse, lorsque l'engin reprend une trajectoire droite, les roues de l'engin tournent dans le même sens à une vitesse leur permettant d'être menées par la couronne. En effet, les deuxièmes éléments d'embrayage reviennent dans la première configuration angulaire selon laquelle ils sont en prise avec la couronne et se maintiennent axialement l'un l'autre contre les premiers éléments d'embrayage de sorte que les roues sont à nouveau menées par la couronne.

Une telle conception des deuxièmes éléments d'embrayage leur permet d'interagir l'un sur l'autre en fonction de leur vitesse de rotation l'un par rapport à l'autre et relativement à la couronne, ce qui permet de maintenir les roues de l'engin en prise avec le moteur en ligne droite pour bénéficier de la fonction automotrice de l'engin tout en permettant de débrayer automatiquement les deux roues lors de la prise d'un virage serré sur lui-même, c'est-à-dire lorsque le virage se fait autour d'un axe de rotation perpendiculaire au sol et situé entre les deux roues de l'engin. Le débrayage simultané des roues est permis par la possibilité de décalage angulaire des deuxièmes éléments d'embrayage des deux mécanismes l'un par rapport à l'autre qui leur permet de se déplacer axialement l'un vers l'autre et ainsi d'échapper aux premiers éléments d'embrayage qui sont solidaires en rotation des roues correspondantes de l'engin.

Ainsi, l'invention permet au conducteur, par exemple marchant derrière l'engin, de prendre un virage très serré avec débrayage automatique des roues de l'engin au cours dudit virage.

Selon une caractéristique avantageuse de l'invention, lesdits deuxièmes éléments d'embrayage sont configurés pour présenter ladite première configuration angulaire lorsque lesdits arbres tournent à la même vitesse et, dans ladite première configuration angulaire, lesdits moyens de contact d'appui des deuxièmes éléments d'embrayage s'opposent axialement par contact d'appui.

Selon une caractéristique avantageuse de l'invention, lesdits deuxièmes éléments d'embrayage sont configurés pour présenter ladite deuxième configuration angulaire lorsque lesdits arbres tournent à des vitesses différentes l'un par rapport à l'autre,
et, dans ladite deuxième configuration angulaire, lesdits moyens de contact d'appui de l'un des deuxièmes éléments d'embrayage sont décalés angulairement par rapport aux moyens de contact d'appui de l'autre deuxième élément d'embrayage.

Selon une caractéristique avantageuse de l'invention, ledit dispositif comprend des moyens de rappel des deuxièmes éléments d'embrayage vers les premiers éléments d'embrayage correspondants.

Selon une caractéristique avantageuse de l'invention, lesdits moyens de contact d'appui de chaque deuxième élément d'embrayage comprennent des dents, orientées vers l'autre deuxième élément d'embrayage qui, dans ladite première configuration angulaire, sont à contact d'appui avec les dents de l'autre deuxième élément d'embrayage par leur sommet, en empêchant un déplacement axial des deuxièmes éléments d'embrayage l'un vers l'autre, et qui, dans la deuxième configuration angulaire, sont décalées angulairement par rapport aux autres dents, en autorisant un déplacement axial des deuxièmes éléments d'embrayage l'un vers l'autre.

Selon une caractéristique avantageuse de l'invention, chacune desdites dents comprend deux flancs opposés inclinés formant rampes qui convergent en direction du sommet plat de la dent.

Selon une caractéristique avantageuse de l'invention, les moyens de couplage entre la couronne et les deuxièmes éléments d'embrayage comprennent des dents dites internes ménagées sur le pourtour interne de la couronne et des dents dites externes ménagées sur le pourtour externe de chacun des deuxièmes éléments d'embrayage logées entre les dents internes de la couronne.

L'espace entre deux dents internes successives de la couronne est supérieur à l'encombrement d'une dent externe d'un deuxième élément d'embrayage. En particulier, l'espace entre deux dents internes successives de la couronne est apte à loger une dent externe d'un deuxième élément d'embrayage et une dent externe de l'autre deuxième élément d'embrayage, qu'ils soient dans la première ou la deuxième configuration angulaire. Autrement dit, les dents de chaque paire de dents internes de la couronne sont espacées d'une distance permettant de loger une dent externe de l'un des deuxièmes éléments d'embrayage et une dent externe de l'autre deuxième élément d'embrayage.

Ledit espace entre deux dents internes de la couronne est aussi choisi de telle sorte que, en configuration débrayée des mécanisme d'embrayage, les moyens de contact d'appui de l'un des deuxièmes éléments d'embrayage, qui sont décalés angulairement par rapport aux moyens de contact d'appui de l'autre deuxième élément d'embrayage, ne puissent pas revenir en opposition axiale sur d'autres moyens de contact d'appui dudit autre deuxième élément d'embrayage. Autrement dit, en configuration débrayée des mécanismes d'embrayage, les dents internes de la couronne limitent la rotation relative des deuxièmes éléments d'embrayage pour empêcher un réembrayage intempestif.

Selon une caractéristique avantageuse de l'invention, les premiers éléments d'embrayage, les deuxièmes éléments d'embrayage et la couronne d'entrée sont pris en sandwich entre deux flasques fixés l'un à l'autre, et traversés par les arbres de roue.

L'invention concerne également un engin roulant automoteur comprenant un dispositif différentiel tel que décrit ci-dessus, et deux roues latérales solidaires l'une de l'un desdits arbres de roue et l'autre de l'autre arbre de roue, ledit engin roulant comprenant aussi un moteur et des moyens de transmission de couple interposés entre ledit moteur et la couronne d'entrée.

L'invention sera bien comprise à la lecture de la description suivante d'exemples de réalisation, en référence aux dessins annexés dans lesquels :

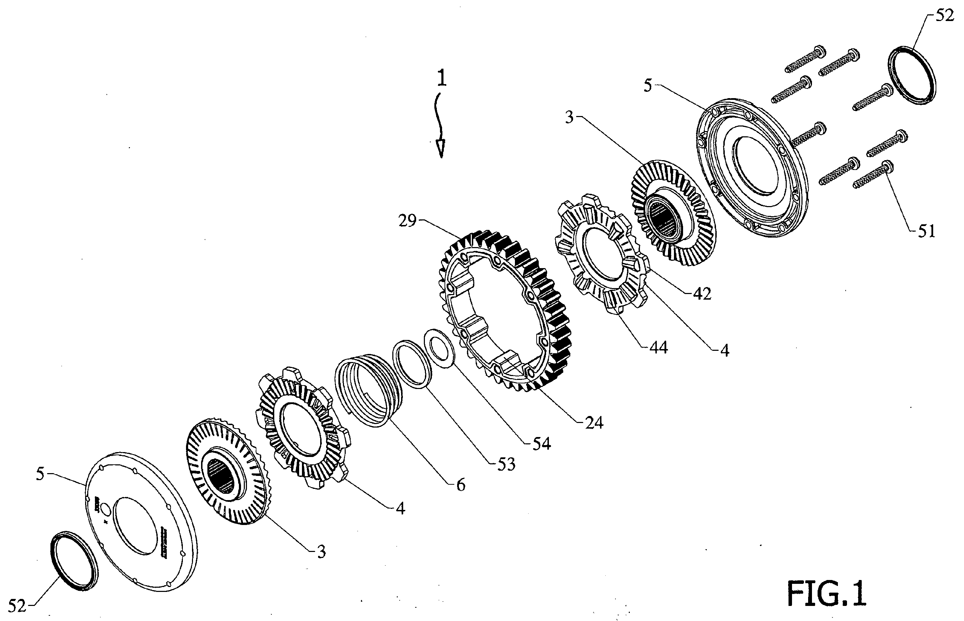

- la figure 1 est une vue éclatée d'un mode de réalisation préféré du dispositif selon l'invention ;
- la figure 2 est une vue en perspective à l'état assemblé du dispositif de la figure 1, dans une configuration selon laquelle les arbres des roues du dispositif sont menés en rotation par la couronne d'entrée, une portion angulaire de la couronne n'étant pas représentée afin de visualiser le positionnement relatif des plateaux d'embrayages mobiles ;
- la figure 2A est une vue de face du dispositif illustré à la figure 2 ;
- la figure 3 est une vue schématique de dessus d'un chasse-neige roulant automoteur à conducteur marchant qui est équipé d'un dispositif selon l'invention, au cours de l'amorce d'un virage ;
- la figure 3A est une vue de face du dispositif illustré à la figure 2 pour une configuration d'amorce de virage telle qu'illustrée à la figure 3 ;
- la figure 4 est une vue schématique de dessus du chasse-neige de la figure 3 au cours de la poursuite du virage par rotation du chasse-neige sur lui-même ;
- la figure 4A est une vue de face du dispositif illustré à la figure 2 pour une configuration de virage telle qu'illustrée à la figure 4.

En référence aux figures et comme rappelé ci-dessus, l'invention concerne un dispositif différentiel pour engin 10 roulant motorisé.

Dans l'exemple illustré aux figures, ledit engin est du type à conducteur marchant. En variante, ledit engin peut être du type à conducteur embarqué.

Avantageusement, ledit engin 10 est un chasse-neige roulant automoteur à conducteur marchant. Le chasse-neige est muni de moyens de contrôle de direction 11 tels que des poignées latérales et/ou un guidon qui permet au conducteur marchant d'appliquer un couple d'effort à l'engin pour le faire tourner, dans un sens ou dans l'autre, afin de prendre un virage à gauche ou à droite.

Comme détaillé ci-après, le conducteur peut en particulier, grâce au dispositif différentiel selon l'invention, qui équipe l'engin, faire pivoter ledit engin autour d'un axe perpendiculaire au sol et situé entre les roues latérales de l'engin pour faire tourner l'engin sur lui même et prendre un virage très serré.

Ledit dispositif comprend une couronne 2 d'entrée apte à être entrainée en rotation autour de son axe par le moteur dudit engin, par l'intermédiaire d'un système de transmission interposé entre la couronne 2 et ledit moteur. A cet effet, la couronne présente une denture externe 29.

Le dispositif comprend deux arbres 7 de roue 8 coaxiaux, distincts l'un de l'autre, et aptes au cours d'un virage de l'engin comme détaillé ci-après à tourner librement l'un par rapport à l'autre. Chaque arbre 7 de roue porte une roue latérale de l'engin.

Le dispositif comprend deux mécanismes d'embrayage 3, 4 répartis de part et d'autre de la couronne 2 et coaxialement à ladite couronne 2. Chaque mécanisme d'embrayage comporte un premier élément d'embrayage 3 monté solidaire en rotation de l'un desdits arbres 7 de roue 8, et un deuxième élément d'embrayage 4 monté libre à rotation par rapport audit arbre 7 et entrainable en rotation par la couronne 2.

Lesdits deuxièmes éléments d'embrayage 4 sont positionnés entre lesdits premiers éléments d'embrayage 3. Le dispositif comprend aussi des moyens de rappel 6 des plateaux d'embrayage 4 vers les premiers moyens d'embrayage 3 correspondants. Avantageusement, lesdits moyens de rappel 6 sont formés par un ressort interposé entre les plateaux d'embrayage 4.

Dans la suite de la description et en référence au mode de réalisation particulier illustré aux figures, les premiers éléments d'embrayage 3 sont formés par des moyeux, appelés moyeux d'embrayage et les deuxièmes éléments d'embrayage 4 sont formés par des plateaux d'embrayage 4. Bien entendu, lesdits premiers et deuxièmes éléments d'embrayage 4 peuvent être réalisés sous d'autres formes de sorte que la description ci-dessous s'applique à d'autres formes de conception des premiers et deuxièmes éléments d'embrayage 4.

Les moyeux d'embrayage 3, les plateaux d'embrayage 4 et la couronne 2 d'entrée sont pris en sandwich entre deux flasques 5, et traversés par les arbres 7 de roue 8. Les deux flasques 5 sont fixés l'un à l'autre par un ensemble de vis 51. Ledit dispositif comprend également un ensemble de bagues d'étanchéité 52, joint 53 et rondelle 54.

La couronne 2, les moyeux d'embrayage 3, les plateaux d'embrayage 4 et les flasques 5 sont des pièces qui présentent chacune un corps principal annulaire coaxial aux autres pièces.

Chacun desdits moyeux 3 d'embrayage est monté solidaire en rotation de l'un desdits arbres 7 de roue 8, de préférence par des cannelures de formes complémentaires ménagées sur l'arbre 7 de roue correspondant et sur le pourtour interne du moyeu 3 d'embrayage.

Pour chaque mécanisme d'embrayage, le plateau d'embrayage 4 et le moyeu d'embrayage 3 sont pourvus de moyens d'embrayage 43, 34 l'un avec l'autre. Lesdits moyens d'embrayage peuvent être des moyens d'embrayage par crabotage ou par friction.

Dans l'exemple illustré aux figures, lesdits moyens d'embrayage sont formés par des dents 43 ménagées sur une face de chaque plateau 4 qui présente des flancs opposés inclinés aptes à former des cames ou rampes avec les dents 34 de formes complémentaires ménagées sur la face du moyeu 3 en regard dudit plateau 4. Les flancs des dents sont de préférence inclinés de 45° par rapport au plan transversal à l'axe du moyeu ou du plateau d'embrayage correspondant.

Ledit plateau d'embrayage 4 est apte à être déplacé axialement entre une position rapprochée dudit moyeu 3 d'embrayage dans laquelle il est embrayé avec le moyeu 3 d'embrayage, et une position écartée dudit moyeu 3 d'embrayage dans laquelle il est débrayé du moyeu 3 d'embrayage. Dans ladite position rapprochée, le moyeu 3 et le plateau 4 sont plaqués l'un contre l'autre de sorte que leurs dents sont imbriquées les unes avec les autres. Le moyeu 3 et le plateau 4 tournent alors à la même vitesse. Dans ladite position écartée, leurs dents sont désengagées les unes des autres, de sorte que le moyeu 3 et le plateau 4 peuvent tourner à des vitesses différentes.

Comme évoqué ci-dessus, ladite couronne 2 et les plateaux d'embrayage 4 sont munis de moyens de couplage 24, 42 entre eux en rotation. Lesdits moyens de couplage en rotation permettent de transmettre l'effort de rotation de la couronne 2 aux plateaux d'embrayage 4 lorsque les plateaux 4 sont menés par la couronne 2. Lorsque les plateaux d'embrayage 4 ont tendance à tourner plus vite que la couronne 2 d'entrée ou en sens opposé, la couronne 2 forme grâce auxdits moyens de couplage 24, 42 un frein vis-à-vis du plateau 4 d'embrayage.

Les moyens d'embrayage 24, 42 entre la couronne 2 et les plateaux d'embrayage 4 comprennent des dents 24 internes ménagées sur le pourtour interne de la couronne 2 et des dents 42 externes ménagées sur le pourtour externe de chacun des plateaux d'embrayage 4. Chaque paire de dents 24 interne de la couronne 2 définit un espace de logement d'une dent 42 de chaque plateau d'embrayage 4. La largeur de chacune des dents 42 et la largeur du logement défini entre chaque paire de dents 24, lesdites largeurs étant prises selon une direction parallèle à l'axe de la couronne d'entrée, sont adaptées pour permettre aux paires de dents 24 de loger les dents 42 des deux plateaux d'embrayage 4, en particulier lorsque les deux plateaux 4 sont en opposition.

Chaque plateau d'embrayage 4 est aussi muni de moyens de contact d'appui 44 avec l'autre plateau d'embrayage 4. Lesdits moyens de contact d'appui 44 permettent aux plateaux d'interagir l'un sur l'autre pour adapter leur position axiale en fonction de la différence de vitesse de rotation des arbres de roue.

Lesdits moyens de contact d'appui 44 de chaque plateau d'embrayage 4 comprennent des dents 44, orientées vers l'autre plateau d'embrayage 4. Dans l'exemple illustré aux figures, lesdites dents 44 de chaque plateau 4 sont formées d'une seule pièce avec les dents 42 dudit plateau 4 qui forment partie des moyens de couplage entre la couronne 2 et ledit plateau 4.

Lorsque les arbres 7 de roue tournent à la même vitesse, les plateaux 4 sont dans une première configuration angulaire. Dans ladite première configuration angulaire des plateaux 4, les dents 44 desdits plateaux 4 se font face et sont à contact d'appui par leur sommet 441 avec les dents de l'autre plateau 4, en empêchant un déplacement axial des plateaux d'embrayage 4 l'un vers l'autre.

Lesdites dents 44 comprennent chacune deux flancs 440 opposés inclinés formant rampes. Le sommet 441 de chaque dent 44 est plat pour permettre un appui stable avec le sommet plat de la dent 44 correspondante de l'autre plateau 4 lorsque les plateaux 4 sont dans ladite première position angulaire.

Lorsque les arbres de roue tournent à des vitesses différentes l'un par rapport à l'autre, il se produit un décalage angulaire des plateaux 4 entre eux. Les plateaux 4 sont alors dans une deuxième configuration angulaire, différente de la première configuration. Dans la deuxième configuration angulaire, les dents 44 d'un plateau 4 sont décalées angulairement par rapport aux dents 44 de l'autre plateau 4, en autorisant ainsi un déplacement axial des plateaux 4 l'un vers l'autre. Le plateau 4 peut alors être débrayé du moyeu 3 correspondant si la vitesse de la roue 8 correspondante de l'engin 10 est différente de celle de la couronne 2 d'entrée.

En particulier, dans ladite deuxième configuration des plateaux 4 pour laquelle les dents 44 de l'un des plateaux 4 sont décalées angulairement par rapport aux dents 44 de l'autre plateau 4, les dents 44 des plateaux 4 se font face par une de leurs rampes 440. Lesdites rampes 440 sont aptes en fonction de la vitesse relative des plateaux 4 à venir à contact d'appui l'une avec l'autre au cours du passage des plateaux 4 de la deuxième configuration angulaire à la première configuration angulaire. Les plateaux 4 peuvent ainsi être déplacés axialement dans le sens d'un écartement l'un de l'autre, par appui d'un flanc 440 d'une dent 44 d'un plateau 4 sur le flanc 440 correspondant de la dent 44 de l'autre plateau 4, en combinaison avec l'effort de rappel des moyens de rappel 6, jusqu'à ce que les dents 44 se fassent face et soient à contact d'appui par leur sommet 441.

Ainsi, lorsque l'un des deux arbres 7 tend à tourner à une vitesse supérieure ou en opposition à celle de la couronne 2 et différente de celle de l'autre arbre 7 et lorsque le plateau 4 correspondant est en prise avec la couronne 2, ledit plateau 4 se décale angulairement de l'autre plateau 4 et est repoussé axialement par le jeu des moyens d'embrayage 43, 34 entre le moyeu 3 et le plateau 4, à écartement de 3 pour échapper audit moyeu 3 de sorte que la roue 8 correspondante couplée audit moyeu par l'intermédiaire de l'arbre 7 correspondant est débrayée.

Chaque rampe d'appui 440 est agencée de telle sorte que l'intersection entre le plan moyen passant par ladite rampe d'appui 440 et le plan passant par l'axe de la couronne 2 et orthogonal au rayon du plateau 4 sur lequel est située ladite rampe d'appui 440, forme une droite inclinée, d'un angle différent de 90° et de préférence de l'ordre de 45°, par rapport à l'axe de la couronne 2.

Les dents internes 24 de la couronne sont espacées les unes des autres le long de la périphérie interne de la couronne 2 d'une distance suffisante pour qu'une paire de dents voisines 24 de la couronne 2 loge la dent 42 correspondante du plateau 4 et la dent 42 correspondante de l'autre plateau 4 lorsque les plateaux 4 sont décalés angulairement. Autrement dit, l'écartement entre deux dents 24 voisines de la couronne 2 est au moins égal à la distance selon laquelle s'étendent les deux dents 42 des plateaux 4 logées entre lesdites dents 24 de la couronne lorsque les dents 44 d'appui des plateaux 4 sont en contact les unes avec les autres par un de leurs flancs.

L'écartement entre deux dents 24 voisines de la couronne 2 est aussi choisi de manière à, en configuration débrayée des mécanismes d'embrayage 3, 4, limiter la rotation relative entre eux des deux plateaux 4 pour qu'une dent 44 d'un plateau 4, qui se retrouve décalée angulairement par rapport à une dent 44 de l'autre plateau 4, ne puisse venir en opposition par contact d'appui axial avec une dent voisine dudit autre plateau 44. Autrement dit, chaque dent 44 d'un plateau 4 ne peut venir en opposition axiale par contact d'appui que sur une seule dent dudit autre plateau 44.

Selon une variante de l'invention non illustrée aux figures, les moyens d'embrayage entre les plateaux d'embrayage et les moyeux d'embrayage correspondants sont formés par des cônes de friction mâles et des cônes de friction femelles.

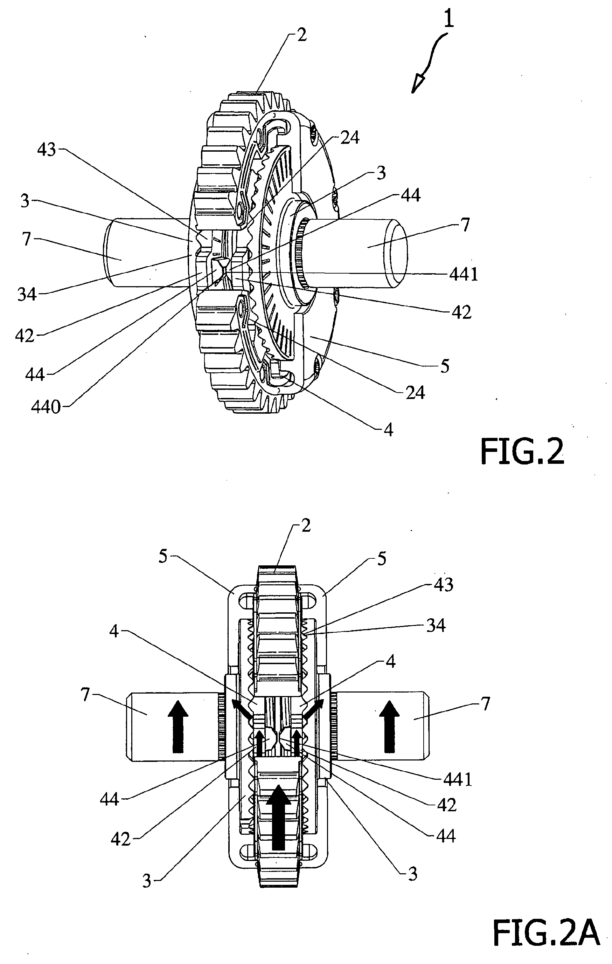

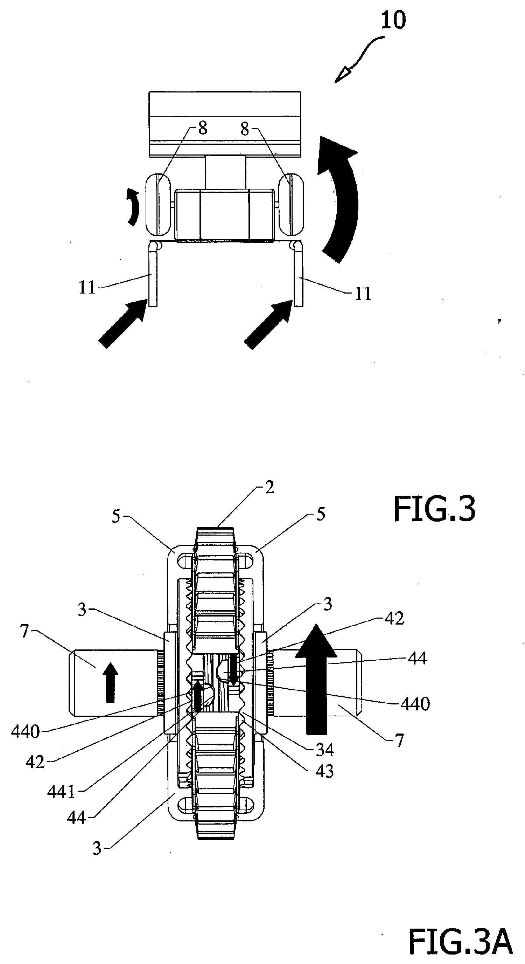

Le fonctionnement d'un engin équipé d'un dispositif 1 différentiel selon l'invention est détaillé ci-après en référence aux figures 2 et 2A correspondant à un déplacement en ligne droite de l'engin et aux figures 3 à 4A correspondant à l'amorce d'un virage et à la poursuite de ce virage par rotation de l'engin 10 sur lui-même.

La figure 2 illustre le dispositif 1 selon l'invention lorsque les arbres 7 de roue 8 sont menés par la couronne 2 et tournent à la même vitesse, ce qui correspondant à une trajectoire en ligne droite de l'engin automoteur (marche avant ou arrière). Les moyens de rappel 6 rappellent les plateaux 4 en position d'embrayage avec les moyeux 3. Les plateaux 4 se maintiennent l'un l'autre plaqués contre les moyeux 3 respectifs par opposition axiale de leurs dents 44 au niveau de leur sommet plat 440.

Comme illustré à la figure 3, lorsque le conducteur amorce un virage en tournant le guidon, la roue latérale extérieure tourne plus vite que la roue latérale intérieure de sorte que les plateaux 4 sont décalés angulairement l'un par rapport à l'autre (voir figure 3A).

Les sommets 441 des dents de contact d'appui 44 des plateaux 4 ne sont plus en opposition et lesdits plateaux 4 peuvent ainsi translater axialement l'une vers l'autre pour permettre le débrayage des roues 8 correspondantes.

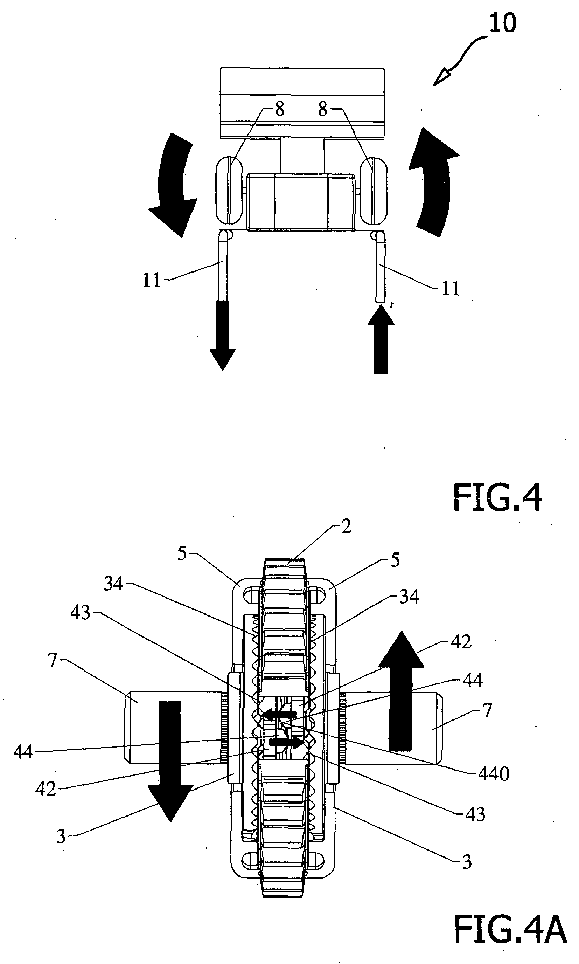

Au cours de la poursuite du virage, comme illustré aux figures 4 et 4A, le conducteur fait pivoter l'engin sur lui-même. La roue intérieure tourne alors dans un sens qui s'oppose à la couronne 2. Le plateau 4 correspondant associé à la roue intérieure vient en butée par une de ses dents 42 contre une dent 24 de la couronne. En outre, la roue extérieure tend encore à tourner plus vite que la couronne 2. Le plateau 4 correspondant associé à la roue extérieure vient alors en butée par une de ses dents 42 contre l'autre dent 24 de la paire de dents 24 qui loge lesdites deux dents 42 des plateaux 4. Il en résulte un écartement et donc un débrayage de chaque plateau 4 par rapport à son moyeu 3. Les deux roues 8 peuvent ainsi tourner librement l'une par rapport à l'autre dans le sens et à la vitesse imposés par le conducteur.

Les plateaux 4 sont maintenus écartés des moyeux 3 et donc débrayés tant que l'effort axial de rappel des moyens de rappel 6, combiné à l'effort axial des dents 44 du plateau 4 sur les dents 44 de l'autre plateau 4, est insuffisant pour compenser l'effort axial contraire exercé par les moyeux 3 sur les plateaux 4.

Lorsque, en sortie de virage, la différence relative de vitesse entre les roues 8 diminue à une valeur telle que l'effort axial des moyens de rappel 6, combiné à l'effort axial des dents 44 du plateau 4 sur les dents 44 de l'autre plateau 4, permet de ramener les plateaux 4 vers les moyeux d'embrayage 3, lesdits plateaux 4 reprennent leur première position angulaire relative dans laquelle leurs dents 44 sont en appui par leur sommet 441, en position d'écartement des plateaux 4 l'un par rapport à l'autre.

Le dispositif selon l'invention fonctionne de la même façon lors de la prise d'un virage en marche arrière et lors de la prise d'un virage en marche avant. Les éléments d'embrayage du dispositif sont identiques d'un côté et de l'autre de la couronne d'entrée, de sorte que l'ensemble des éléments d'embrayage du dispositif présente un plan de symétrie passant par le plan moyen de la couronne d'entrée.

## Revendications

1. Dispositif différentiel pour engin (10) roulant automoteur, ledit dispositif (1) comprenant :
- une couronne (2) d'entrée apte à être entrainée en rotation par le moteur dudit engin,
- deux arbres (7) de roue (8) distincts l'un de l'autre et répartis de part et d'autre de la couronne (2) coaxialement à ladite couronne (2),
- deux mécanismes d'embrayage comprenant chacun un premier élément d'embrayage (3) monté solidaire en rotation de l'un desdits arbres (7) de roue (8), et un deuxième élément d'embrayage (4) monté libre à rotation par rapport audit arbre (7) et entrainable en rotation par la couronne (2), lesdits deuxièmes éléments d'embrayage (4) étant positionnés entre lesdits premiers éléments d'embrayage (3),
- pour chaque mécanisme d'embrayage, ledit deuxième élément d'embrayage (4) étant apte à être déplacé axialement entre une position rapprochée dudit premier élément d'embrayage (3) dans laquelle il est embrayé avec le premier élément d'embrayage (3), et une position écartée dudit premier élément d'embrayage (3) dans laquelle il est débrayé du premier élément d'embrayage (3),
- ladite couronne (2) et les deuxièmes éléments d'embrayage (4) étant munis de moyens de couplage (24, 42) entre eux en rotation,
**caractérisé en ce que** chaque deuxième élément d'embrayage (4) est aussi muni de moyens de contact d'appui (44) avec l'autre deuxième élément d'embrayage (4), lesdits moyens de contact d'appui (44) étant aptes, pour une première configuration angulaire donnée des deuxièmes éléments d'embrayage (4) l'un par rapport à l'autre, à maintenir les deuxièmes éléments d'embrayage (4) en position embrayée avec les premiers éléments d'embrayage (3) correspondants,
et lesdits moyens de contact d'appui (44) étant aussi aptes, pour une deuxième configuration angulaire donnée des deuxièmes éléments d'embrayage (4) l'un par rapport à l'autre, différente de la première configuration, à autoriser le passage des deuxièmes éléments d'embrayage (4) en position débrayée par rapport aux premiers éléments d'embrayage (3).

2. Dispositif selon la revendication 1, **caractérisé en ce que** lesdits deuxièmes éléments d'embrayage (4) sont configurés pour présenter ladite première configuration angulaire lorsque lesdits arbres (7) tournent à la même vitesse. et **en ce que**, dans ladite première configuration angulaire, lesdits moyens de contact d'appui (44) des deuxièmes éléments d'embrayage (4) s'opposent axialement par contact d'appui.

3. Dispositif selon la revendication 1 ou 2, **caractérisé en ce que** lesdits deuxièmes éléments d'embrayage (4) sont configurés pour présenter ladite deuxième configuration angulaire lorsque lesdits arbres (7) tournent à des vitesses différentes l'un par rapport à l'autre,
et **en ce que**, dans ladite deuxième configuration angulaire, lesdits moyens de contact d'appui (44) de l'un des deuxièmes éléments d'embrayage (4) sont décalés angulairement par rapport aux moyens de contact d'appui (44) de l'autre deuxième élément d'embrayage (4).

4. Dispositif selon l'une des revendications précédentes, **caractérisé en ce que** ledit dispositif (1) comprend des moyens de rappel (6) des deuxièmes éléments d'embrayage (4) vers les premiers éléments d'embrayage (3) correspondants.

5. Dispositif selon l'une des revendications précédentes, **caractérisé en ce que** lesdits moyens de contact d'appui (44) de chaque deuxième élément d'embrayage (4) comprennent des dents (44), orientées vers l'autre deuxième élément d'embrayage (4), qui, dans ladite première configuration angulaire, sont à contact d'appui avec les dents de l'autre deuxième élément d'embrayage (4) par leur sommet (441), en empêchant un déplacement axial des deuxièmes éléments d'embrayage (4) l'un vers l'autre, et qui, dans la deuxième configuration angulaire, sont décalées angulairement par rapport aux autres dents, en autorisant un déplacement axial des deuxièmes éléments d'embrayage (4) l'un vers l'autre.

6. Dispositif selon la revendication 5, **caractérisé en ce que** chacune desdites dents (44) comprend deux flancs (440) opposés inclinés formant rampes qui convergent en direction du sommet plat (441) de la dent.

7. Dispositif selon l'une des revendications précédentes, **caractérisé en ce que** les moyens de couplage (24, 42) entre la couronne (2) et les deuxièmes éléments d'embrayage (4) comprennent des dents (24) dites internes ménagées sur le pourtour interne de la couronne (2) et des dents (42) dites externes ménagées sur le pourtour externe de chacun des deuxièmes éléments d'embrayage (4) logées entre les dents (24) internes de la couronne (2).

8. Dispositif selon la revendication 7, **caractérisé en ce que** les dents (24) de chaque paire de dents internes de la couronne (2) sont espacées d'une distance permettant de loger une dent (42) externe de l'un des deuxièmes éléments d'embrayage (4) et une dent (42) externe de l'autre deuxième élément d'embrayage (4).

9. Dispositif selon l'une des revendications précédentes, **caractérisé en ce que** les premiers éléments d'embrayage (3), les deuxièmes éléments d'embrayage (4) et la couronne (2) d'entrée sont pris en sandwich entre deux flasques (5) fixés l'un à l'autre, et traversés par les arbres (7) de roue (8).

10. Engin (10) roulant automoteur, comprenant un dispositif différentiel (1) conforme à l'une des revendications précédentes et deux roues latérales solidaires l'une de l'un desdits arbres (7) de roue et l'autre de l'autre arbre (7) de roue, ledit engin roulant comprenant aussi un moteur et des moyens de transmission de couple interposés entre ledit moteur et la couronne (2) d'entrée.

## Patentansprüche

1. Differentialvorrichtung für ein motorisiertes Radfahrzeug (10), wobei die Vorrichtung (1) umfasst:
- einen Eingangskranz (2), der vom Motor des Fahrzeugs rotierend antreibbar ist,
- zwei voneinander unterschiedliche und beidseits des Kranzes (2) koaxial zum Kranz (2) verteilte Wellen (7) eines Rads (8),
- zwei Kupplungsmechanismen, die jeweils ein erstes Kupplungselement (3), das mit einer der Wellen (7) eines Rads (8) rotierend fest verbunden ist, und ein zweites Kupplungselement (4), das in Bezug zur Welle (7) frei montiert ist und von dem Kranz (2) rotierend antreibbar ist, umfassen, wobei die zweiten Kupplungselemente (4) zwischen den ersten Kupplungselementen (3) positioniert sind,
- wobei für jeden Kupplungsmechanismus das zweite Kupplungselement (4) zwischen einer an das erste Kupplungselement (3) angenäherten Position, in welcher es mit dem ersten Kupplungselement (3) gekuppelt ist, und einer vom ersten Kupplungselement (3) beabstandeten Position, in welcher es vom ersten Kupplungselement (3) entkuppelt ist, axial verlagerbar ist,
- wobei der Kranz (2) und die zweiten Kupplungselemente (4) mit Kopplungsmitteln (24, 42) ausgestattet sind, die sie miteinander rotierend verbinden,
**dadurch gekennzeichnet, dass** jedes zweite Kupplungselement (4) auch mit Stützkontaktmitteln (44) mit dem anderen zweiten Kupplungselement (4) ausgestattet ist, wobei die Stützkontaktmittel (44) für eine erste bestimmte Winkelkonfiguration der zweiten Kupplungselemente (4) zueinander imstande sind, die zweiten Kupplungselemente (4) mit den entsprechenden ersten Kupplungselementen (3) in gekuppelter Position zu halten,
und die Stützkontaktmittel (44) für eine zweite bestimmte Winkelkonfiguration der zweiten Kupplungselemente (4) zueinander, die sich von der ersten Konfiguration unterscheidet, auch imstande sind, den Übergang der zweiten Kupplungselemente (4) in in Bezug zu den ersten Kupplungselementen (3) ausgekuppelte Position zu erlauben.

2. Vorrichtung nach Anspruch 1, **dadurch gekennzeichnet, dass** die zweiten Kupplungselemente (4) konfiguriert sind, um die erste Winkelkonfiguration aufzuweisen, wenn die Wellen (7) mit derselben Geschwindigkeit drehen,
und dass sich in der ersten Winkelkonfiguration die Stützkontaktmittel (44) der zweiten Kupplungselemente (4) durch Stützkontakt axial gegenüberstehen.

3. Vorrichtung nach Anspruch 1 oder 2, **dadurch gekennzeichnet, dass** die zweiten Kupplungselemente (4) konfiguriert sind, um die zweite Winkelkonfiguration aufzuweisen, wenn die Wellen (7) mit zueinander unterschiedlichen Geschwindigkeiten drehen,
und dass in der zweiten Winkelkonfiguration die Stützkontaktmittel (44) eines der zweiten Kupplungselemente (4) in Bezug zu den Stützkontaktmitteln (44) des anderen zweiten Kupplungselements (4) winklig versetzt sind.

4. Vorrichtung nach einem der vorangehenden Ansprüche, **dadurch gekennzeichnet, dass** die Vorrichtung (1) Rückstellmittel (6) der zweiten Kupplungselemente (4) in Richtung der entsprechenden ersten Kupplungselemente (3) umfasst.

5. Vorrichtung nach einem der vorangehenden Ansprüche, **dadurch gekennzeichnet, dass** die Stützkontaktmittel (44) jedes zweiten Kupplungselements (4) Zähne (44) umfassen, die zum anderen zweiten Kupplungselement (4) zeigen, die in der ersten Winkelkonfiguration mit den Zähnen des anderen zweiten Kupplungselements (4) mittels ihrer Spitze (441) in Stützkontakt sind, wobei sie eine axiale Verlagerung der zweiten Kupplungselemente (4) zueinander verhindern, und die in der zweiten Winkelkonfiguration in Bezug zu den anderen Zähnen winklig versetzt sind und dabei eine axiale Verlagerung der zweiten Kupplungselemente (4) zueinander erlauben.

6. Vorrichtung nach Anspruch 5, **dadurch gekennzeichnet, dass** jeder der Zähne (44) zwei gegenüberliegende geneigte Flanken (440) umfasst, die in Richtung der flachen Spitze (441) des Zahns konvergierende Rampen bilden.

7. Vorrichtung nach einem der vorangehenden Ansprüche, **dadurch gekennzeichnet, dass** die Kopplungsmittel (24, 42) zwischen dem Kranz (2) und den zweiten Kupplungselementen (4) interne Zähne (24), die auf dem inneren Umfang des Kranzes (2) ausgebildet sind, und externe Zähne (42), die auf dem äußeren Umfang jedes zweiten Kupplungselements (4) ausgebildet sind, die sich zwischen den internen Zähnen (24) des Kranzes (2) befinden, umfassen.

8. Vorrichtung nach Anspruch 7, **dadurch gekennzeichnet, dass** die Zähne (24) jedes Paars interner Zähne des Kranzes (2) in einem Abstand beabstandet sind, der erlaubt, einen externen Zahn (42) eines der zweiten Kupplungselemente (4) und einen externen Zahn (42) des anderen zweiten Kupplungselements (4) aufzunehmen.

9. Vorrichtung nach einem der vorangehenden Ansprüche, **dadurch gekennzeichnet, dass** die ersten Kupplungselemente (3), die zweiten Kupplungselemente (4) und der Eingangskranz (2) sandwichartig zwischen zwei aneinander befestigten und von den Wallen (7) der Räder (8) durchquerten Wangen (5) eingeschlossen sind.

10. Motorisiertes Radfahrzeug (10), umfassend eine Differentialvorrichtung (1) nach einem der vorangehenden Ansprüche und zwei Seitenräder, von denen eines mit einer der Antriebswellen (7) und das andere mit der anderen Antriebswelle (7) fest verbunden ist, wobei das Fahrzeug ebenfalls einen Motor und Momentübertragungsmittel umfasst, die zwischen dem Motor und dem Eingangskranz (2) zwischengestellt sind.

## Claims

1. A differential device for a self-propelled wheeled vehicle (10), said device (1) comprising:
- an input crown (2) able to be rotated by the motor of said vehicle,
- two wheel (8) shafts (7) separated from one another and distributed on either side of the crown (2) coaxially to said crown (2),
- two clutch mechanisms each comprising a first clutch element (3) mounted secured in rotation with one of said wheel (8) shafts (7), and a second clutch element (4) mounted freely rotating relative to said shaft (7) and able to be rotated by said crown (2), said second clutch elements (4) being positioned between said first clutch elements (3),
- for each clutch mechanism, said second clutch element (4) being able to be moved axially between a close position of said first clutch element (3) in which it is engaged with the first clutch element (3), and a position separated from said first clutch element (3) in which it is disengaged from the first clutch element (3),
- said crown (2) and the second clutch elements (4) being provided with coupling means (24, 42) rotating with respect to one another,
**characterized in that** each said second clutch element (4) is also provided with bearing contact means (44) with the other second clutch element (4), said bearing contact means (44) being able, for a first given angular configuration of the second clutch elements (4) relative to one another, to keep the second clutch elements (4) in the engaged position with the corresponding first clutch elements (3),
and said bearing contact means (44) also being suitable, for a second given angular configuration of the second clutch elements (4) relative to one another, different from the first configuration, for allowing the passage of the second clutch elements (4) to the disengaged position with respect to the first clutch elements (3).

2. The device according to claim 1, **characterized in that** said second clutch elements (4) are configured to assume said first angular configuration when said shafts (7) rotate at the same speed,
and **in that**, in said first angular configuration, said bearing contact means (44) of the second clutch elements (4) axially oppose one another by bearing contact.

3. The device according to claim 1 or 2, **characterized in that** said second clutch elements (4) are configured to assume said second angular configuration when said shafts (7) rotate at different speeds relative to one another,
and **in that**, in said second angular configuration, said bearing contact means (44) of one of the second clutch elements (4) are angularly offset relative to the bearing contact means (44) of the other second clutch element (4).

4. The device according to one of the preceding claims, **characterized in that** said device (1) comprises return means (6) for returning the second clutch elements (4) toward the corresponding first clutch elements (3).

5. The device according to one of the preceding claims, **characterized in that** said bearing contact means (44) of each second clutch element (4) comprise teeth (44), oriented toward the other second clutch element (4), which, in said first angular configuration, are in bearing contact with the teeth of the other second clutch element (4) by their apex (441), while preventing axial movement of the second clutch elements (4) toward one another, and which, in the second angular configuration, are angularly offset relative to the other teeth, while allowing an axial movement of the second clutch elements (4) toward one another.

6. The device according to claim 5, **characterized in that** each of said teeth (44) comprises two inclined opposite flanks (440) forming ramps that converge toward the flat apex (441) of the tooth.

7. The device according to one of the preceding claims, **characterized in that** the coupling means (24, 42) between the crown (2) and the second clutch elements (4) comprise so-called inner teeth (24) arranged on the inner perimeter of the crown (2) and so-called outer teeth (42) arranged on the outer perimeter of each of the second clutch elements (4) housed between the inner teeth (24) of the crown (2).

8. The device according to claim 7, **characterized in that** the teeth (24) of each pair of inner teeth of the crown (2) are spaced apart by a distance making it possible to house an outer tooth (42) of one of the second clutch elements (4) and an outer tooth (42) of the other second clutch element (4).

9. The device according to one of the preceding claims, **characterized in that** the first clutch elements (3), the second clutch elements (4) and the input crown (2) are sandwiched between two flanges (5) fastened to one another, and crossed through by the wheel (8) shafts (7).

10. A self-propelled wheeled vehicle (10), comprising a differential device (1) according to one of the preceding claims and two side wheels, one of which is secured to one of said wheel shafts (7) and the other of which is secured to the other wheel shaft (7), said wheeled vehicle also comprising a motor and torque transmitting means inserted between said motor and the input crown (2).
